# EUROPEAN PATENT APPLICATION

(11) **EP 2 450 110 A1**
(43) Date of publication of application: **09.05.2012**
(21) Application number: 10794162.7
(22) Date of filing: 30.06.2010
(51) Int. Cl.: B06B 1/04, H02K 33/18

(54) **STRUCTURE OF VIBRATION ACTUATOR**

(30) Priority: 01.07.2009 JP 2009157184
(71) Applicant: Namiki Seimitsu Houseki Kabushiki Kaisha, Adachi-ku, Tokyo 123-8511 (JP)
(72) Inventor: UEDA Minoru, Tokyo 123-8511 (JP); HASHIMOTO Yuichi, Tokyo 123-8511 (JP); KURITA Hiroyuki, Tokyo 123-8511 (JP)
(74) Representative: Kitzhofer, Thomas
(86) International application number: PCT/JP2010/061098
(87) International publication number: WO 2011/001994

(57) **Abstract**

Provided is a vibration actuator the amplitude of which is increased without reducing the number and width of arms, even in a structure that supports a magnetic circuit section by a single suspension. Both increased amplitude and stabilized vibrating properties are achieved by using a structure in which the middle part of each arm of a suspension is provided with a bent portion in the planar direction, and the metal fatigue of the suspension produced when vibrating is reduced by incorporating the suspension in a state in which the suspension is deformed in advance in an expansion/contraction direction (i.e. the vibrating direction of said magnetic circuit section). Additionally, these advantages, which extend the life of the whole component, allow the component to be enviromnentally friendly.

## Description

### TECHNICAL FIELD

The present invention relates to a vibration actuator having a dynamic structure for elastically supporting a magnetic circuit section having a magnet in a housing with a suspension being interposed therebetween, and for causing the magnetic circuit section to vibrate by a magnetic force generated between a coil separately installed in the housing and the magnetic circuit section.

### BACKGROUND ART

Currently, mobile communication apparatuses, typically exemplified by portable telephones, are provided with a vibration actuator for informing the user of an incoming signal by vibrations. As a typical structure of such an actuator, JP-A-09-205763 (hereinafter referred to as "Patent Document 1") proposes an actuator having a dynamic structure, and this actuator has been used in a wide range of fields because of its simple structure and low costs.

Moreover, as a structure in which a weight is added to the structure described in the above-mentioned Patent Document 1, another structure has been filed as JP-A-2006-325198 (hereinafter referred to as Patent Document 2) and published. In the structure described in Patent Document 2, a weight is added to the structure disclosed in Patent Document 1, such that the amount of vibration is increased at the time of generating vibration. In addition, by attaching a suspension thereto in a deformed state, the deformation of the suspension is optimized with respect to a weight increase of the weight so that, even in the case of the same housing shape, a larger weight is installable in the resulting structure.

### RELATED ART DOCUMENT

### PATENT DOCUMENT

Patent Document 1: JP-A-09-205763
Patent Document 2: JP-A-2006-325198
Patent Document 3: JP-A-09-117721

### DISCLOSURE OF THE INVENTION

### PROBLEMS TO BE SOLVED BY THE INVENTION

In the vibration actuators described in Patent Document 1 and Patent Document 2, however, at the time of generating vibration, since the amplitude is determined by the arm of the suspension because of the structure of the suspension, difficulty may arise in securing the amplitude and also in maintaining the strength of the arm. This is because, in the case where a suspension extended only by the length of the arm is used, the width of the arm is smaller.

In general, in the case of a vibration actuator, as disclosed in Patent Documents 1 and 2, in which the magnetic circuit section is supported by one sheet of suspension, in comparison with a vibration actuator that uses two sheets of suspensions, typically exemplified by JP-A-09-117721 (hereinafter referred to as Patent Document 3), the suspension tends to be broken due to accumulated metal fatigue, and abnormal vibration tend to occur due to a biased balance in the center of gravity. On the other hand, in the structure of Patent Document 3 in which the magnetic circuit section is supported by two sheets of suspensions, since the magnetic circuit section is sandwiched by two suspensions, the effective volume to be occupied by the weight is reduced in comparison with the vibration actuator that uses one sheet of suspension.

In addition, in the suspension having the structure disclosed in Patent Document 2, a structure is used in which, by using two arms, the arms are housed in the respective connecting portions of the arms. For this reason, in the structure disclosed in Patent Document 2, while the length and width of the arm can be ensured, because of the reduced number of arms, vibration of the magnetic circuit section are hardly stabilized at the time of generating vibration.

In view of the above circumstances, an object of the present invention is to provide a vibration actuator the amplitude of which is increased without reducing the number and width of arms, even in a structure that supports a magnetic circuit section by a single suspension.

### MEANS FOR SOLVING THE PROBLEMS

In order to achieve the above object, the invention according to claim 1 has a structure in which the above-described suspension is provided with an arm having a bent portion in a middle part thereof in a planer direction. By using this structure, the suspension disclosed by the present invention is allowed for extension of the length of the arm without each arm being interfered with a connecting portion between another arm and an inner ring portion as well as a connecting portion between another arm and an outer ring portion.

Moreover, since the arms are overlapped in the radial direction by the use of bent portions, connecting portions between the arm and the inner ring portion to be attached to the magnetic circuit section can be made wider. Therefore, even when a weight made of a material with high specific gravity is attached to the magnetic circuit section, effects of an increased amplitude and a properly maintained strength of the suspension connecting portions are achieved at the same time.

Furthermore, the suspension of the present invention has a structure in which the outer ring portion and the inner ring portion having a plate shape are connected to each other by the arms. For this reason, in mass production, an inexpensive manufacturing method by the use of a punching process is applicable. Since the suspension is formed into a plate shape, thickness reduction is achieved as a whole upon assembling the suspension into the vibration actuator.

With the structure according to claim 2, a structure in which the vibration actuator, preliminarily formed into a deformed state in an expansion/contraction direction, is assembled into the vibration actuator, with respect to the suspension according to claim 1. Therefore, the effect of improving durability against metal fatigue caused upon generating vibration can be obtained.

The effect is obtained by the structure in which the amount of displacement that is adjusted based upon desired vibrating properties is preliminarily added such that loads to be applied to the respective portions of the suspension are dispersed over the entire suspension. More specifically, by desirably forming a bent portion in an expansion/contraction direction of the suspension, that is, the vibrating direction of the magnetic circuit section, the amounts of displacements of the respective portions of the suspension at the time of generating vibration are adjustable by the preliminarily applied amount of displacement.

Moreover, by preliminarily deforming the suspension, an offset is generated in the expansion/contraction direction between the inner ring portion and the outer ring portion. Thus, the generated offset allows for increase in volume of the weight to be mounted on the magnetic circuit section.

Furthermore, by combining the bent portion with the middle part of an arm of the deformed suspension, the inclination of the deformation to be applied to the suspension can be changed, with the bent portion serving as a border. Thus, the layout and inclination of the bent portion are changed based upon the desired vibrating properties so that stable vibrating properties can be obtained.

By preliminarily deforming the suspension, the perpendicular position of the magnetic circuit section that is elastically supported inside the housing is adjustable. Thus, the perpendicular position of the magnetic circuit section, which is determined by the fixed position of the suspension in the structure of Patent Document 1 because of the flat plate shape of the suspension, is settable at another height different from the attached position of the suspension.

In addition to the above effects, the invention according to claim 3 uses a structure in which the outer ring portion of the suspension is allowed to protrude over the magnetic circuit section. This structure allows for prevention of the magnetic circuit section and the coil from colliding with each other even upon impact at the time of, for example, falling down, and also to provide the stopper function, without adding a new member onto the inner wall of the housing.

As described above, by using the vibration actuator having the above-described structures of the present invention, a vibration actuator capable of spreading the amplitude and stabilizing the vibrating properties is achieved even with a single suspension.

### BRIEF DESCRIPTION OF THE DRAWINGS

Fig. 1 is a perspective view of a vibration actuator used in an embodiment of the present invention.
Fig. 2 is a cross-sectional view of the vibration actuator of Fig. 1 taken along line A-A'.
Fig. 3 is an exploded perspective view of the vibration actuator of Fig. 1.
Fig. 4 is a perspective view of a suspension for use in the vibration actuator of Fig. 1.
Fig. 5 is a plan view of the suspension for use in the vibration actuator of Fig. 1.
Fig. 6 is a front view of the suspension for use in the vibration actuator of Fig. 1.

### BEST MODE FOR CARRYING OUT THE INVENTION

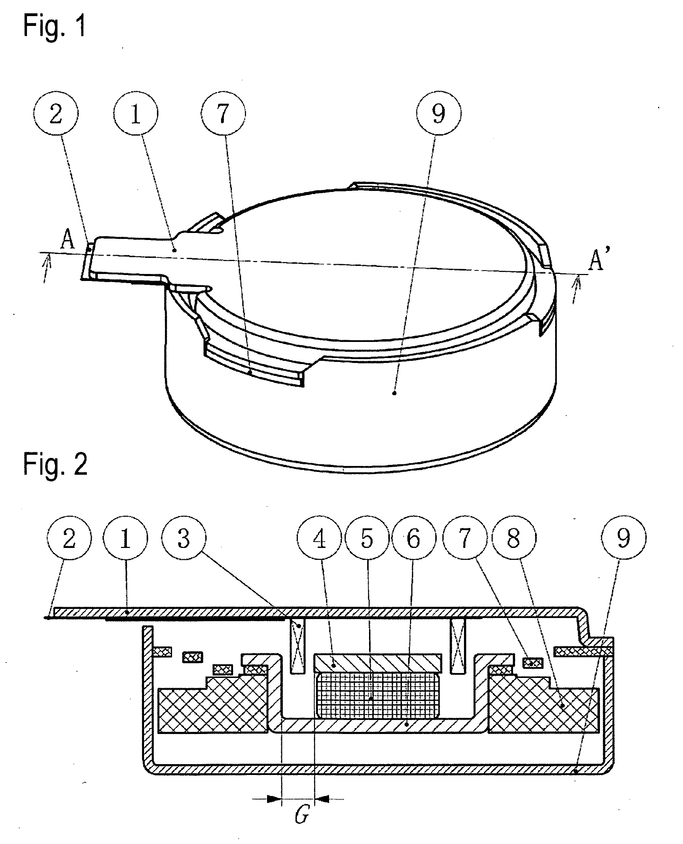

The best mode for carrying out the invention is described with reference to Figs. 1 to 6.

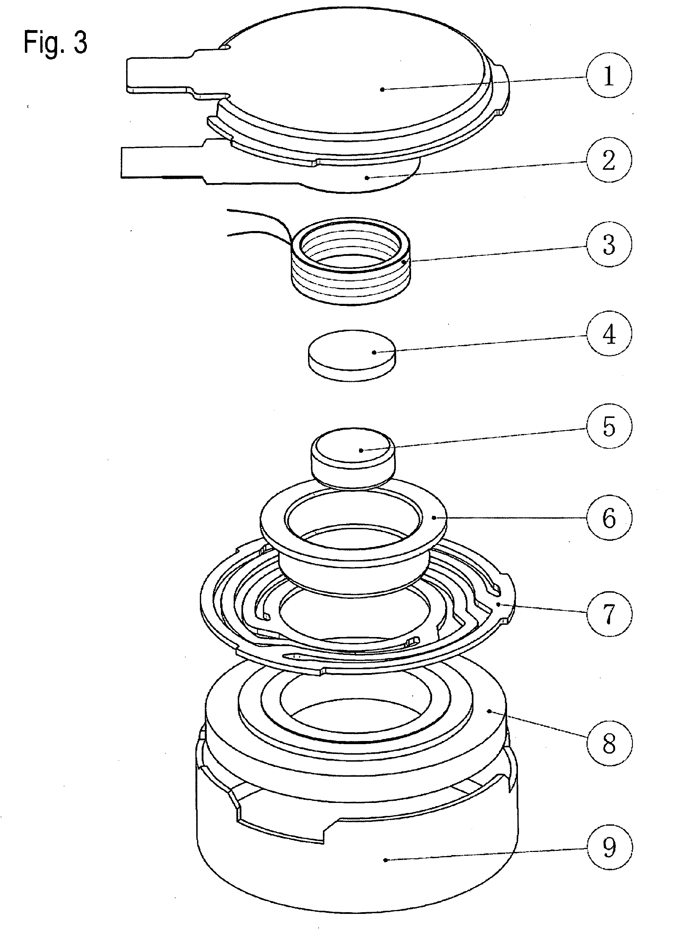

Fig. 1 is a perspective view of a vibration actuator used in the present embodiment, Fig. 2 is a cross-sectional view of the vibration actuator of Fig. 1 taken along line A-A', Fig. 3 is an exploded perspective view of the vibration actuator of Fig. 1, and Figs. 4, 5, and 6 are a perspective view, a plan view, and a front view, respectively, of a suspension to be used in the present embodiment.

As can be seen from Figs. 1, 2, and 3, the vibration actuator described in the present embodiment has a dynamic structure in which a magnetic circuit section constituted by a pole piece 4, a magnet 5 and a yoke 6 that are elastically supported by a suspension 7 is driven by a coil 3 that is separately attached to a contact substrate 2.

More specifically, in the structure of the magnetic circuit section, the magnet 5 magnetized in a thickness direction, i.e., a vibration direction, is sandwiched between the pole piece 4 made of a magnetic body and the yoke 6, and the magnetic circuit section is fixed with a suspension inner ring portion 103 being sandwiched between a weight 8 made of a material with high specific gravity that is attached to a yoke outer circumferential portion, and the yoke 6.
With respect to the securing portion, the coil 3 that is electrically connected and fixed to the contact substrate 2 is placed in a magnetic gap G in the magnetic circuit section such that in this driving method, the magnetic circuit section that is elastically supported to a housing 9 through the suspension 7 is vibrated through interaction between a magnetic field generated by the coil 3 and a magnetic field in the magnetic gap G in the magnetic circuit section.

By using the above-described structure, the vibration actuator described in the present embodiment allows for providing body sensitive vibrations to the user by using a minimum number of parts for the dynamic structure. Moreover, since the contact substrate 2 is formed into a thin film, the rate at which the thickness of a power supply portion occupies the entire vibration actuator is reduced such that a thinner structure is achieved as a whole.

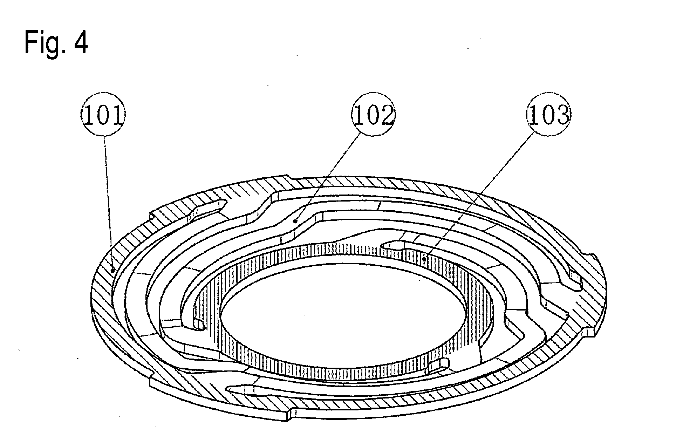

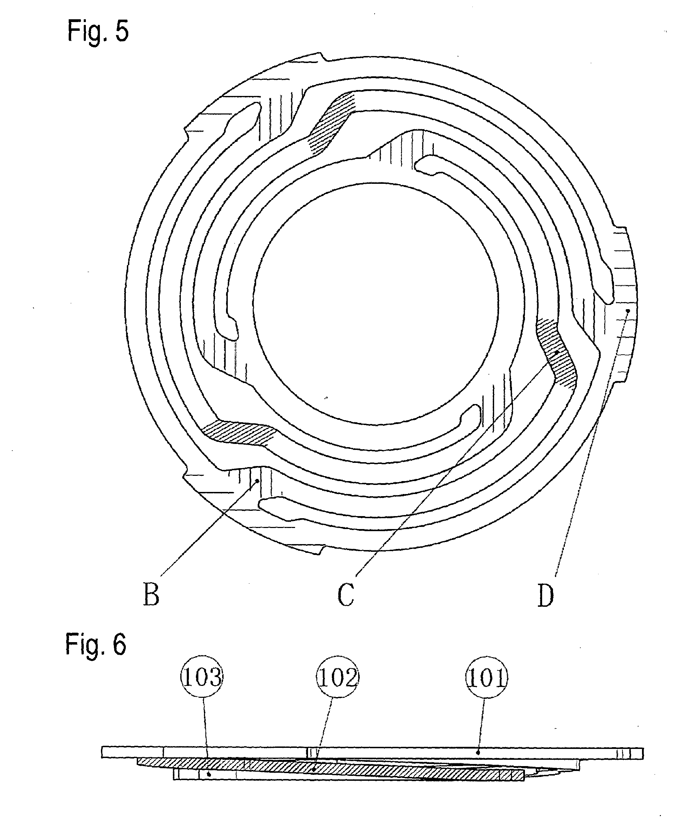

As can be seen from Figs. 4 and 5, in the vibration actuator described in the present embodiment, the inner ring portion 103 and the outer ring portion 101 are coupled to each other by an arm 102 with a coaxial shape having an S-letter-shaped bent portion C located in the middle part thereof in the radial direction. Each arm is extended in an arc direction without a connecting portion B of each arm being interfered with another arm, and the respective connecting portions B between the outer ring portion 101 and the arm 102 as well as between the inner ring portion 103 and the arm 102 are made as wide as possible. For this reason, although the weight 8 made from a material with high specific gravity is attached to the magnetic circuit section, a long amplitude obtained by extending the arm 102 and improved durability obtained by making the connecting portions B as wide as possible are achieved at the same time.

Moreover, as can be seen from Fig. 6, the vibration actuator described in the present embodiment has a structure in which the suspension 7 is deformed in an expansion/contraction direction of the suspension, i.e., the vibrating direction of the magnetic circuit section, in advance and attached to the magnetic circuit section. Therefore, in comparison with a hitherto-used structure using a flat-plate suspension, the present invention allows for properly addressing to an increased weight of the magnetic circuit section by the use of an offset in the vibration direction caused between the inner ring portion 103 and the outer ring portion 101 and to the subsequent increase in stress upon generation of vibration.

Moreover, with respect to the layout of the suspension inner ring portion 103, the present embodiment uses a structure in which a magnetic gap G serving as a driving source on the magnetic circuit section side and the inner ring portion 103 serving as a supporting portion thereof are located adjacent to each other. For this reason, in comparison with the structure disclosed in Patent Document 1 in which the bottom side of the magnetic circuit section is supported, stabilization of vibrating properties upon generation of vibration is achieved.

Furthermore, by using the structure in which the suspension inner ring portion 103 is held between the yoke 6 and the weight 8, an effect of preventing, for example, separation that might occur at the time of falling down can be obtained in addition to the effects obtained by the shape of the suspension.

In addition to the above-described structure, the present embodiment uses a structure in which the suspension outer ring portion 101 is allowed to protrude inward relative to the magnetic circuit section. Therefore, even upon impact at the time of, for example, falling down, the outer ring portion 101 functions as a stopper for the magnetic circuit section, allowing for preventing the coil 3 and the yoke 6 from colliding against each other.

Moreover, in the present embodiment, as depicted in Fig. 6, a structure is used in which a protruding portion D provided on the suspension outer ring portion 101 is assembled into a cut-out section of the housing 9. For this reason, the suspension attaching space can be reduced relative to the dimension in the thickness direction.

As described above, by using the structures described in the present embodiment, a vibration actuator is achieved with an increasable amplitude without reducing the number and width of arms, even in a structure where a magnetic circuit section is supported by a single suspension.

### DESCRIPTION OF REFERENCE SIGNS

- 1: cover
- 2: contact substrate
- 3: coil
- 4: pole piece
- 5: magnet
- 6: yoke
- 7: suspension
- 8: weight
- 9: housing
- 101: outer ring portion
- 102: arm
- 103: inner ring portion
- B: connecting portion
- C: S-letter-shaped bent portion
- D: protruding portion
- G: magnetic gap

## Claims

1. A vibration actuator having a dynamic structure comprising:
a suspension in which a plate-shaped inner ring and a plate-shaped outer ring are coupled to each other by an arm having a bent portion in a middle part thereof in a radial direction.

2. The vibration actuator according to claim 1, wherein the suspension is deformed in an expansion/contraction direction in advance.

3. The vibration actuator according to claim 1 or 2, wherein the suspension outer ring portion is allowed to protrude over a magnetic circuit section.
